# EUROPEAN PATENT APPLICATION

(11) **EP 4 635 343 A1**
(43) Date of publication of application: **22.10.2025**
(21) Application number: 22968563.1
(22) Date of filing: 16.12.2022
(51) Int. Cl.: A24F 40/57, A24F 40/50

(54) **AEROSOL GENERATION DEVICE**

(71) Applicant: Japan Tobacco Inc., Tokyo 105-6927 (JP)
(72) Inventor: KAWANAGO, Hiroshi, Tokyo 130-8603 (JP)
(74) Representative: Hoffmann Eitle
(86) International application number: PCT/JP2022/046478
(87) International publication number: WO 2024/127655

(57) **Abstract**

An inhalation device (100) comprises: a first voltage system (10) that is configured to be able to supply a first voltage generated on the basis of the output voltage of a power supply unit (111) to a resistor (Rheat) as a heating unit; a second voltage system (20) that is configured to be able to supply a second voltage generated on the basis of the output voltage of the power supply unit (111) to the resistor (Rheat); and an MCU (50) as a control unit. The first voltage is lower than the second voltage. The MCU (50) acquires the temperature of the resistor (Rheat) on the basis of the electrical resistance of the resistor (Rheat) acquired by supplying the first voltage to the resistor (Rheat) and controls the supply of the second voltage to the resistor (Rheat) depending on the temperature.

## Description

### TECHNICAL FIELD

The present disclosure relates to an aerosol generation device.

### BACKGROUND ART

Conventionally, for example, aerosol generation devices which generate an aerosol with a flavor component and deliver the generated aerosol to a user in an inhalable manner are known. Such aerosol generation devices typically generate the aerosol by heating a substrate, which typically comprises an aerosol source, with a heating unit (also referred to as a "heating element"), which is an electrically resistive or inductively heated heater.

For example, PTL 1 below discloses a feature in which, at the stage of controlling the temperature of a heating element, the resistivity of the heating element is measured and the actual operating temperature value of the heating element is derived from the measurement of the resistivity, with the electrical energy to be supplied to the heating element being regulated in order to maintain the actual operating temperature of the heating element at or below a prescribed maximum operating temperature.

### CITATION LIST

### PATENT LITERATURE

[PTL 1] Published Japanese translation of PCT international publication for patent application 2011-515093

### SUMMARY OF INVENTION

### TECHNICAL PROBLEM

However, with the conventional technology, there was room for improvement from the viewpoint of reducing the power consumption when acquiring the temperature of the heating unit on the basis of the electrical resistance of the heating unit.

The present disclosure provides an aerosol generation device that can reduce the power consumption when obtaining the temperature of the heating unit on the basis of the electrical resistance of the heating unit.

### SOLUTION TO PROBLEM

One aspect of the present disclosure is an aerosol generation device comprising:
a power supply;
a heating unit that includes a heating resistor having a correlation between electrical resistance and temperature, and that is configured to be able to heat an aerosol source by being supplied with power;
a first voltage system that is provided between the power supply and the heating unit, and that is configured to be able to supply, to the heating unit, a first voltage generated on the basis of an output voltage of the power supply;
a second voltage system that is provided between the power supply and the heating unit, and that is configured to be able to supply, to the heating unit, a second voltage generated on the basis of the output voltage of the power supply; and
a control unit that is configured to be able to control the supply of the first voltage to the heating unit by the first voltage system, and the supply of the second voltage to the heating unit by the second voltage system, wherein
the first voltage is a voltage lower than the second voltage, and
the control unit acquires the temperature of the heating unit on the basis of the electrical resistance of the heating unit acquired by supplying the first voltage to the heating unit, and controls the supply of the second voltage to the heating unit on the basis of the temperature.

### ADVANTAGEOUS EFFECTS OF INVENTION

According to the present disclosure, it is possible to provide an aerosol generation device that can reduce the power consumption when acquiring the temperature of the heating unit on the basis of the electrical resistance of the heating unit.

### BRIEF DESCRIPTION OF DRAWINGS

Fig. 1A is a schematic diagram schematically showing a first configuration example of an inhalation device.
Fig. 1B is a schematic diagram schematically showing a second configuration example of the inhalation device.
Fig. 2 is a view showing a first example of a circuit configuration of an inhalation device 100.
Fig. 3 is a view showing a control example of each control target by an MCU 50 during temperature detection control.
Fig. 4 is a view showing a control example of each control target by the MCU 50 during heating control.
Fig. 5 is a view showing a second example of a circuit configuration of the inhalation device 100.
Fig. 6 is a view showing a third example of a circuit configuration of the inhalation device 100.
Fig. 7 is a view showing a fourth example of a circuit configuration of the inhalation device 100.

### DESCRIPTION OF EMBODIMENTS

One embodiment of the aerosol generation device of the present disclosure will be described below in detail with reference to the drawings. The embodiment described below is an example of an application of an aerosol generation device of the present disclosure to an inhalation device. Note that the drawings shall be viewed in the orientation of the reference signs. Furthermore, hereinafter, the same or similar elements may be given the same or similar reference signs, and the description thereof may be omitted or simplified as appropriate.

### [1. Configuration Example of Inhalation Device]

An inhalation device which is one example of an aerosol generation device of the present disclosure is a device for generating a substance to be inhaled by a user. Hereinafter, the substance generated by the inhalation device is described as being an aerosol. Alternatively, the substance generated by the inhalation device may be a gas.

### <1-1. First Configuration Example of Inhalation Device>

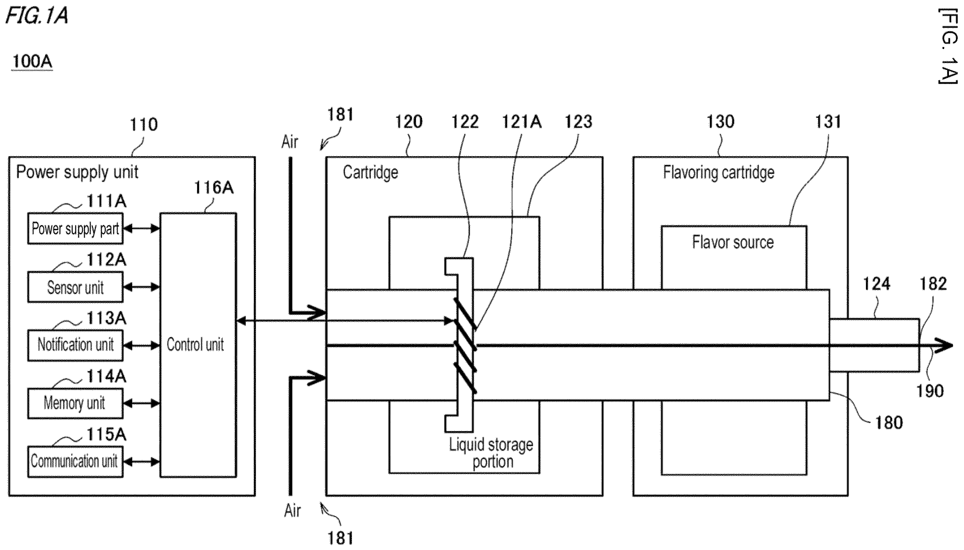

Fig. 1A is a schematic diagram schematically showing a first configuration example of the inhalation device. As shown in fig. 1A, the inhalation device 100A of the present configuration example includes a power supply unit 110, a cartridge 120, and a flavoring cartridge 130. The power supply unit 110 comprises a power supply part 111A, a sensor unit 112A, a notification unit 113A, a memory unit 114A, a communication unit 115A, and a control unit 116A. The cartridge 120 includes a heating unit 121A, a liquid guiding portion 122, and a liquid storage portion 123. The flavoring cartridge 130 includes a flavor source 131 and a mouthpiece 124. An air flow path 180 is formed in the cartridge 120 and the flavoring cartridge 130.

The power supply part 111A stores electrical power. The power supply part 111A then supplies the electrical power to each component of the inhalation device 100A in accordance with control performed by the control unit 116A. The power supply part 111A may be configured, for example, by a rechargeable battery such as a lithium ion secondary battery.

The sensor unit 112A acquires various types of information relating to the inhalation device 100A. The sensor unit 112A is configured by, for example, a pressure sensor such as a capacitor microphone, a flow rate sensor or a temperature sensor, etc., and acquires values associated with inhalation by a user.

As an example, the sensor unit 112A may include a pressure sensor (also referred to as a "puff sensor") that detects a change in pressure (also referred to hereinafter as "internal pressure") in the inhalation device 100A caused by inhalation by the user. As another example, the sensor unit 112A may include a flow sensor for detecting a flow rate caused by inhalation by the user (hereinafter simply referred to as "flow rate"). Furthermore, as another example, the sensor unit 112A may include a temperature sensor (also referred to as a "puff thermistor") that detects the temperature of the heating unit 121A or the temperature around the heating unit 121A.

Furthermore, the sensor unit 112A may further comprise an input device, such as an operation button or a switch, for accepting input of information from the user. As an example, the sensor unit 112A can include an operation button as the input device that accepts a heating start operation, which is described later.

The notification unit 113A notifies the user of information. The notification unit 113A can be configured by a light-emitting device which emits light, a display device which displays images, a sound output device which outputs sound, or a vibration device which vibrates, etc., for example.

The memory unit 114A stores various information (e.g. programs and data) for operation of the inhalation device 100A. The memory unit 114A can be configured by a non-volatile storage medium such as a flash memory, for example.

The communication unit 115A is a communication interface capable of performing communication in accordance with any wired or wireless communication standard. Examples of communication standards that may be used include standards that employ Wi-Fi (registered trademark), Bluetooth (registered trademark), Bluetooth Low Energy (BLE) (registered trademark), Near-Field Communication (NFC), or Low Power Wide Area (LPWA), and so on.

The control unit 116A functions as an arithmetic processing device and a control device, and controls overall operation within the inhalation device 100A in accordance with various programs stored in the memory unit 114A, etc. The control unit 116A is realized by a Central Processing Unit (CPU) or an electronic circuit such as a microprocessor, for example. As an example, the control unit 116A can be realized by the MCU 50 (MCU: Micro Controller Unit) described later.

The liquid storage portion 123 stores an aerosol source. The aerosol source is atomized to generate an aerosol. The aerosol source is a polyhydric alcohol such as glycerol or propylene glycol, or a liquid such as water, for example. The aerosol source may include tobacco-derived or non-tobacco-derived flavor components. If the inhalation device 100A is a medical inhaler such as a nebulizer, the aerosol source may include a drug.

The liquid guiding portion 122 guides the aerosol source, which is the liquid stored in the liquid storage portion 123, from the liquid storage portion 123, and holds the aerosol source. The liquid guiding portion 122 is, for example, a wick formed by twisting a fibrous material such as glass fibers or a porous material such as a porous ceramic. In this case, the aerosol source stored in the liquid storage portion 123 is guided by the capillary effect of the wick.

The heating unit 121A includes a heating resistor that has a correlation between electrical resistance and temperature. As an example, a member having PTC properties (PTC: Positive Temperature Coefficient) where electrical resistance also increases in conjunction with an increase in temperature is used for the heating resistor of the heating unit 121A. The heating resistor having PTC properties can be composed of, for example, nichrome (NiCr), stainless steel, or tungsten, etc. Furthermore, a member having NTC properties (NTC: Negative Temperature Coefficient) where electrical resistance decreases in conjunction with an increase in temperature may be used for the heating resistor of the heating unit 121A.

The heating unit 121A heats the aerosol source to atomize the aerosol source, thereby generating the aerosol. In the example shown in fig. 1A, the heating unit 121A is configured as a coil wrapped around the heating resistor, and is wrapped around the liquid guiding portion 122. When the heating unit 121A generates heat, the aerosol source held in the liquid guiding portion 122 is then heated and atomized, generating the aerosol. The heating unit 121A generates heat when supplied with electricity from the power supply part 111A.

By way of example, the supply of electricity to the heating unit 121A may be performed when the sensor unit 112A detects that the user has started inhaling and/or that prescribed information has been input. The supply of electricity to the heating unit 121A may then be stopped when the sensor unit 112A detects that the user has finished inhaling and/or that prescribed information has been input.

The flavor source 131 is a component for imparting a flavor component to the aerosol. The flavor source 131 may include tobacco-derived or non-tobacco-derived flavor components.

The air flow path 180 is a flow path for air to be inhaled by the user. The air flow path 180 has a tubular structure with an air inflow hole 181, which is an inlet for air into the air flow path 180, and an air outflow hole 182, which is an outlet for air from the air flow path 180, forming the two ends. Within the air flow path 180, the liquid guiding portion 122 is disposed upstream (closer to the air inflow hole 181), and the flavor source 131 is disposed downstream (closer to the air outflow hole 182). Air flowing in through the air inflow hole 181 upon inhalation by the user is mixed with the aerosol generated by the heating unit 121A and transported through the flavor source 131 to the air outflow hole 182, as shown by the arrow 190. When the mixed fluid of aerosol and air passes through the flavor source 131, the flavor component contained in the flavor source 131 is applied to the aerosol.

The mouthpiece 124 is a member that is held in the user's mouth during inhalation. The air outflow hole 182 is disposed in the mouthpiece 124. The user holds the mouthpiece 124 in their mouth to make it possible to draw the mixed fluid of aerosol and air into the oral cavity.

A configuration example of the inhalation device 100A has been described above. The inhalation device 100A is, of course, not limited to the configuration described above, and various configurations may be adopted, such as those illustrated below as examples.

As an example, the inhalation device 100A need not include the flavoring cartridge 130. In this case, the cartridge 120 is provided with the mouthpiece 124.

As another example, the inhalation device 100A may include a plurality of types of aerosol sources. Other types of aerosol may be generated by a plurality of types of aerosol generated from the plurality of types of aerosol sources being mixed in the air flow path 180 to cause a chemical reaction.

Furthermore, the means for atomizing the aerosol source is not limited to heating provided by the heating unit 121A. For example, the means for atomizing the aerosol source may be vibration atomization or induction heating.

### <1-2. Second Configuration Example of Inhalation Device>

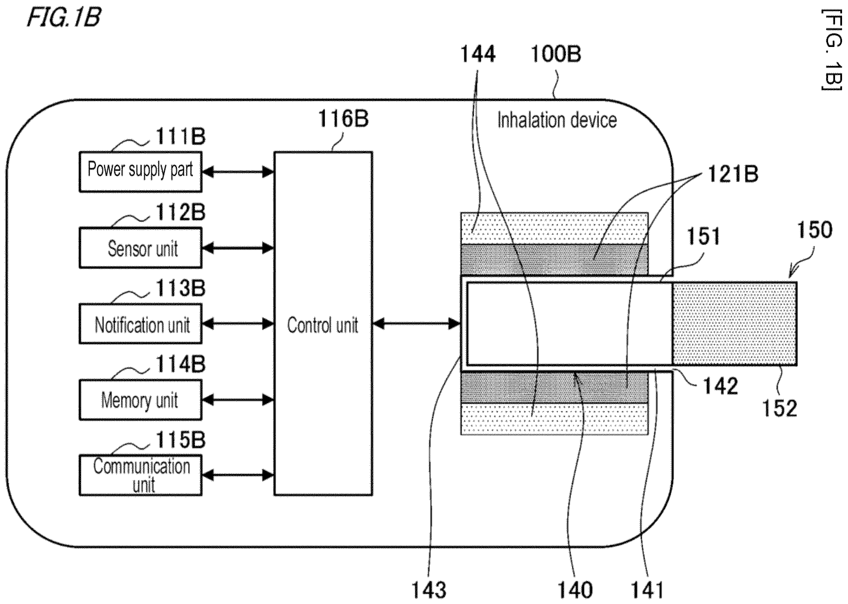

Fig. 1B is a schematic diagram schematically showing a second configuration example of the inhalation device. As illustrated in fig. 1B, the inhalation device 100B according to the present configuration example comprises a power supply part 111B, a sensor unit 112B, a notification unit 113B, a memory unit 114B, a communication unit 115B, a control unit 116B, a heating unit 121B, an accommodating portion 140, and a heat insulating portion 144.

The power supply part 111B, sensor unit 112B, notification unit 113B, memory unit 114B, communication unit 115B, and control unit 116B are each substantially identical to the corresponding component included in the inhalation device 100A described above.

The accommodating portion 140 has an internal space 141, and holds a stick-type substrate 150 while accommodating a portion of the stick-type substrate 150 in the internal space 141. The accommodating portion 140 has an opening 142 allowing the internal space 141 to communicate with the outside, and accommodates the stick-type substrate 150 that has been inserted into the internal space 141 from the opening 142. For example, the accommodating portion 140 is a cylindrical body comprising the opening 142 and a bottom portion 143 serving as a bottom surface, and defines the columnar internal space 141. An air flow path for supplying air to the internal space 141 is connected to the accommodating portion 140. An air inflow hole, which is an inlet for air into the air flow path, is disposed in a side surface of the inhalation device 100, for example. An air outflow hole serving as an outlet for air from the air flow path to the internal space 141 is disposed in the bottom portion 143, for example.

The stick-type substrate 150 comprises a substrate portion 151 and a mouthpiece portion 152. The substrate portion 151 includes an aerosol source. The aerosol source includes a tobacco-derived or non-tobacco-derived flavor component. If the inhalation device 100B is a medical inhaler such as a nebulizer, the aerosol source may include a drug. The aerosol source may be, for example, a liquid such as water and polyhydric alcohols such as glycerol and propylene glycol comprising the tobacco-derived or non-tobacco-derived flavor component, or else may be a solid comprising the tobacco-derived or non-tobacco-derived flavor component. In a state in which the stick-type substrate 150 is being held in the accommodating portion 140, at least a portion of the substrate portion 151 is accommodated in the internal space 141, and at least a portion of the mouthpiece portion 152 protrudes from the opening 142. Then, when the user holds the mouthpiece portion 152 protruding from the opening 142 in their mouth and inhales, air flows into the internal space 141 via the air flow path, which is not illustrated in the drawings, and reaches the inside of the user's mouth together with the aerosol generated from the substrate portion 151.

In the example shown in fig. 1B, the heating unit 121B is configured as a film heater with a conductive track made of a heating resistor having a correlation between electrical resistance and temperature, and is arranged to cover the outer circumference of the housing part 140. Then, when the heating unit 121B generates heat, the substrate portion 151 of the stick-type substrate 150 is heated from the outer periphery, generating the aerosol. Note that, a heating resistor the same as the heating resistor of the heating unit 121A described previously can be used as the heating resistor of the heating unit 121B.

The heat insulating portion 144 prevents heat transfer from the heating unit 121B to other components. For example, the heat insulating portion 144 is configured from a vacuum heat insulating material or an aerogel heat insulating material, or the like.

A configuration example of the inhalation device 100B has been described above. The inhalation device 100B is, of course, not limited to the configuration described above, and various configurations may be adopted, such as the examples illustrated below.

As one example, the heating unit 121B may have a blade-like form and may be arranged so as to protrude into the internal space 141 from the bottom portion 143 of the accommodating portion 140. In that case, the blade-like heating unit 121B is inserted into the substrate portion 151 of the stick-type substrate 150 and heats the substrate portion 151 of the stick-type substrate 150 from the inside. As another example, the heating unit 121B may be arranged so as to cover the bottom portion 143 of the accommodating portion 140. Furthermore, the heating unit 121B may be configured from a combination of two or more from among a first heating unit covering the outer circumference of the accommodating portion 140, a blade-like second heating unit, and a third heating unit covering the bottom portion 143 of the accommodating portion 140.

As another example, the accommodating portion 140 may comprise an opening/closing mechanism such as a hinge for opening/closing part of an external casing that forms the internal space 141. By opening/closing the casing, the accommodating portion 140 may then receive and grip the stick-type substrate 150 that has been inserted into the internal space 141. In this case, the heating unit 121B may be provided on the gripping part of the accommodating portion 140, and may heat the stick-type substrate 150 while pressing the same.

Furthermore, the means for atomizing the aerosol source is not limited to heating provided by the heating unit 121B. For example, the means for atomizing the aerosol source may be induction heating. In this case, the inhalation device 100B comprises at least an electromagnetic induction source such as a coil for generating a magnetic field, instead of the heating unit 121B. A susceptor which generates heat by means of induction heating may be provided in the inhalation device 100B, or may be contained in the stick-type substrate 150.

The inhalation device 100B may further include the heating unit 121A, the liquid guiding portion 122, the liquid storage portion 123 and the air flow path 180 according to the first configuration example, and the air flow path 180 may supply air to the internal space 141. In this case, the mixed fluid of aerosol and air generated by the heating unit 121A flows into the internal space 141 and is further mixed with the aerosol generated by the heating unit 121B, and reaches the oral cavity of the user.

Note that, hereinafter, unless otherwise stated, the inhalation device of the present embodiment is described as the inhalation device 100B shown in fig. 1B, but the present invention is not limited to this, and the same can also apply when the inhalation device 100 of the present embodiment is the inhalation device 100A shown in fig. 1A.

### [2. Circuit Configuration of Inhalation Device]

A circuit configuration of the inhalation device 100 will be described next. Note that, in order to simplify the explanation below, the explanation will focus on the parts of the circuit of the inhalation device 100 that relate to the supply of power to the heating unit 121 (for example, the heating unit 121B), and illustrations and explanations for other parts shall be omitted or simplified as appropriate.

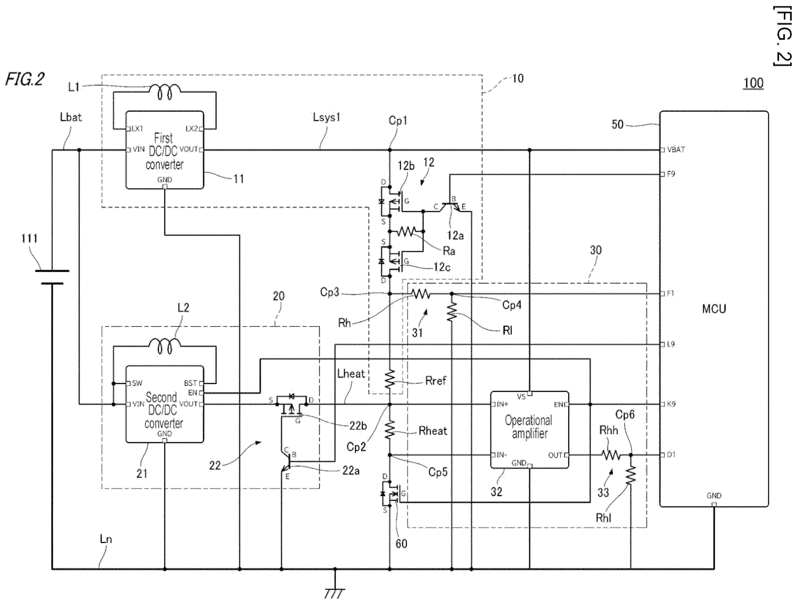

Fig. 2 is a view showing a first example of the circuit configuration of the inhalation device 100. In fig. 2, the wiring indicated by the sign Ln is the wiring having the reference potential in the circuit of the inhalation device 100. Hereinafter, the wiring Ln will also be referred to as "ground line LN" and the potential of ground line Ln will be 0 V. Additionally, hereinafter each voltage below shall, unless otherwise stated, represent the potential difference from the ground line Ln (i.e., 0 V).

As shown in fig. 2, the inhalation device 100 includes the power supply part 111 (for example, power supply part 111B), which is a rechargeable battery such as a lithium-ion rechargeable battery, a resistor Rheat serving as the heating resistor of the heating unit 121 (for example, heating unit 121B), and the MCU 50 serving as a microprocessor for realizing the control unit 116 (for example, control unit 116B). Furthermore, the inhalation device 100 further includes a first voltage system 10, a second voltage system 20, and a temperature detection circuit 30.

The power supply part 111 is configured to be able to output approximately 4 V as the voltage across the positive terminal and negative terminal, for example. Hereinafter, the output voltage of the power supply part 111 is also referred to as the "power supply voltage Vbat". The positive terminal of the power supply part 111 is connected to the power supply voltage line Lbat. The negative terminal of the power supply part 111 is connected to the ground line Ln.

### <2-1. First Voltage System>

The first voltage system 10 is provided between the power supply part 111 and the resistor Rheat (i.e., the heating unit 121), and is configured to be able to supply the first voltage generated on the basis of the power supply voltage Vbat to the resistor Rheat.

In the example shown in fig. 2, the first voltage system 10 includes a first DC/DC converter 11 and a first switch circuit 12. The first voltage system 10 can then supply the system voltage Vcc (described later) generated by the first DC/DC converter 11 to the resistor Rheat via the first switch circuit 12 and resistor Rref. Here, the resistor Rref is a resistor that has a prescribed electrical resistance and is connected in series with the resistor Rheat.

The first DC/DC converter 11 is used in combination with a first inductor L1, which functions as a power inductor, and is an IC (Integrated Circuit) that functions as a switching regulator to convert the input DC voltage into a prescribed DC voltage.

For example, the first DC/DC converter 11 includes a VIN terminal, GND terminal, VOUT terminal, LX1 terminal, and LX2 terminal as terminals for electrically connecting the inside and outside of the first DC/DC converter 11.

The VIN terminal of the first DC/DC converter 11 is a power supply terminal on the high potential side of the first DC/DC converter 11 and is connected to the positive terminal of the power supply part 111 via the power supply voltage line Lbat. The GND terminal is the ground terminal (in other words, the power supply terminal on the low potential side) of the first DC/DC converter 11 and is connected to the ground line Ln. The VOUT terminal is an output terminal to which a system voltage Vcc generated by the first DC/DC converter 11 is output, and is connected to the VBAT terminal, which is the power supply terminal on the high potential side of the MCU 50, via a system voltage line Lsys1. The LX1 terminal and LX2 terminal are used to connect the first DC/DC converter 11 and the first inductor L1.

The first DC/DC converter 11, for example, generates the system voltage Vcc when the power supply voltage Vbat is input via the VIN terminal and outputs the system voltage from the VOUT terminal. The system voltage Vcc output from the first DC/DC converter 11 can be supplied to the MCU 50 and/or resistor Rheat via the system voltage line Lsys1. In other words, the system voltage line Lsys1 is the power line to which the system voltage Vcc is supplied from the first DC/DC converter 11.

The system voltage Vcc is the voltage required for proper operation of the MCU 50, and can be 3.3 V, for example. Hereinafter, the system voltage Vcc is described as being 3.3 V, but the system voltage is not limited to this. However, the system voltage Vcc shall be set lower than the heating voltage Vheat, which will be described later.

The first switch circuit 12 is a circuit that operates under the control of the MCU 50 and functions as a switch to switch on or off the connection between the first voltage system 10 and the resistor Rheat (i.e., the heating unit 121). When the first switch circuit 12 is in the on state, the first voltage system 10 is electrically connected to the resistor Rheat, and when the first switch circuit 12 is in the off state, the first voltage system 10 is electrically disconnected from the resistor Rheat.

In the example shown in fig. 2, the first switch circuit 12 includes a BJT 12a (BJT: Bipolar junction transistor), a FET 12b (FET: Field effect transistor), a FET 12c, and a resistor Ra. The BJT 12a is an NPN type bipolar transistor. The FET 12b and FET 12c are P-channel MOSFETs (Metal-Oxide-Semiconductor Field Effect Transistors). The resistor Ra is a resistor having a prescribed electrical resistance.

The base of the BJT 12a is connected to a prescribed output terminal of the MCU 50 (for example, the F9 terminal here). The emitter of the BJT 12a is connected to the ground line Ln. The collector of the BJT 12a is connected to the respective gates of the FET 12b and FET 12c. Note that a configuration comprising a base resistor between the base of the BJT 12a and a prescribed output terminal of the MCU 50 may be adopted, or a configuration comprising a collector resistor between the collector of the BJT 12a and the respective gates of the FET 12b and FET 12c may be adopted, or a configuration in which an element is inserted as appropriate may be adopted. Furthermore, the BJT 12a is an example of a switch (the first switch) for regulating the gate potential of the FET 12b and FET 12c, but this switch is not limited to a NPN type bipolar transistor such as the BJT 12a. For example, a switch for regulating the gate potential of the FET 12b and FET 12c may be used as an N-channel MOSFET. In this case, the gate of the N-channel MOSFET is connected to the prescribed output terminal (e.g., F9 terminal) of the MCU 50, the source is connected to the ground line Ln, and the drain is connected to the respective gates of the FET 12b and FET 12c.

The respective sources of the FET 12b and FET 12c are connected to each other and to the respective gates of the FET 12b and FET 12c through the resistor Ra. The drain of the FET 12b is connected to a connection point Cp1 provided on the system voltage line Lsys1. The drain of the FET 12c is connected to one end of the resistor Rheat through the resistor Rref.

The other end of the resistor Rheat is connected to the ground line Ln, for example, via a FET 60, which functions as a low-side switch to turn on or off the power supply to the resistor Rheat.

For example, the FET 60 is an N-channel MOSFET. Additionally, the gate of the FET 60 is connected to a prescribed output terminal (for example, the K9 terminal) of the MCU 50. The drain of the FET 60 is connected to the other end of the resistor Rheat. The source of the FET 60 is connected to the ground line Ln.

### <2-2. Second Voltage System>

The second voltage system 20 is provided between the power supply part 111 and the resistor Rheat (i.e., the heating unit 121), and is configured to be able to supply the second voltage generated on the basis of the power supply voltage Vbat (i.e., the output voltage of the power supply unit 111) to the resistor Rheat.

In the example shown in fig. 2, the second voltage system 20 includes a second DC/DC converter 21 and a second switch circuit 22. The second voltage system 20 can then supply a heating voltage Vheat (described later) generated by the second DC/DC converter 21 to the resistor Rheat via the second switch circuit 22.

The second DC/DC converter 21 is used in combination with a second inductor L2, which functions as a power inductor, and is an IC that functions as a switching regulator to convert the input DC voltage into a prescribed DC voltage.

For example, the second DC/DC converter 21 includes a VIN terminal, GND terminal, VOUT terminal, SW terminal, BST terminal, and EN terminal as terminals for electrically connecting the inside and outside of second first DC/DC converter 21.

The VIN terminal of the second DC/DC converter 21 is a power supply terminal on the high potential side of the second DC/DC converter 21 and is connected to the positive terminal of the power supply part 111 via the power supply voltage line Lbat. The GND terminal is the ground terminal of the second DC/DC converter 21 and is connected to the ground line Ln. The VOUT terminal is an output terminal where the heating voltage Vheat generated by the second DC/DC converter 21 is output and is connected via the heating voltage line Lheat to the connection point Cp2 between the resistor Rref and resistor Rheat. The SW terminal and BST terminal are used to connect the second DC/DC converter 21 and the second inductor L 2. Additionally, EN terminal is connected to a prescribed output terminal (for example, the K9 terminal) of the MCU 50.

The second DC/DC converter 21, for example, generates the heating voltage Vheat by raising the power supply voltage Vbat when the power supply voltage Vbat is input via the VIN terminal in a state in which a high-level voltage is input to the EN terminal, and outputs the heating voltage from the VOUT terminal. The heating voltage Vheat output from the second DC/DC converter 21 can be supplied to the resistor Rheat via the heating voltage line Lheat. In other words, the heating voltage line Lheat is the power line to which the heating voltage Vheat is supplied from the second DC/DC converter 21.

In the present embodiment, the heating voltage Vheat is set to a voltage higher than the system voltage Vcc (i.e., 3.3 V), such as 5 V, for example, in order to efficiently and rapidly cause the resistor Rheat (i.e., the heating unit 121) to generate heat. Hereinafter, the heating voltage is described as being 5 V, but the heating voltage is not limited to this.

The second switch circuit 22 is a circuit that operates under the control of the MCU 50 and functions as a switch for controlling the supply of power to the resistor Rheat (i.e., the heating unit 121) from the second voltage system 20. In the embodiment, the heating unit 121 is supplied with power in the form of pulses by pulse width modulation (PWM), for example. The second switch circuit 22 is used to adjust the duty ratio of the power pulses supplied to the heating unit 121.

In the example shown in fig. 2, the second switch circuit 22 includes a BJT 22a and a FET 22b. The BJT 22a is an NPN type bipolar transistor. The FET 22b is a P-channel MOSFET.

The base of the BJT 22a is connected to a prescribed output terminal of the MCU 50 (for example, the L9 terminal here). The emitter of the BJT 22a is connected to the ground line Ln. The collector of BJT 22a is connected to the gate of the FET 22b. Note that a configuration comprising a base resistor between the base of the BJT 22a and a prescribed output terminal of the MCU 50 may be adopted, or a configuration comprising a collector resistor between the collector of the BJT 22a and the gate of the FET 22b may be adopted, or a configuration in which an element is inserted as appropriate may be adopted. Furthermore, the BJT 22a is an example of a switch for regulating the gate potential of the FET 22b, and this switch is not limited to a NPN type bipolar transistor such as the BJT 22a. For example, a switch for regulating the gate potential of the FET 22b can be used as an N-channel MOSFET. In this case, the gate of the N-channel MOSFET is connected to the prescribed output terminal (e.g., L9 terminal) of the MCU 50, the source is connected to the ground line Ln, and the drain is connected to the gate of the FET 22b.

The FET 22b is provided on the heating voltage line Lheat. The drain of the FET 22b is then connected to the connection point Cp2 described above. The source of the FET 22b is connected to the VOUT terminal of the second DC/DC converter 21.

### <2-3. Temperature Measurement Circuit>

The temperature detection circuit 30 is configured such that the MCU 50 can acquire the voltage drop amount caused by the resistor Rheat (i.e., the heating unit 121). Note that, if the MCU 50 can acquire the voltage drop amount caused by the resistor Rheat, the electrical resistance of the resistor Rheat can be acquired from the voltage drop amount. Additionally, if the MCU 50 can acquire the electrical resistance of the resistor Rheat, the temperature of the resistor Rheat can be acquired from the electrical resistance.

In the example shown in fig. 2, the temperature detection circuit 30 includes a first voltage divider circuit 31, an operational amplifier 32, and a second voltage divider circuit 33.

The first voltage divider circuit 31 includes a series connection between a resistor Rh and a resistor Rl, each of which has a prescribed electrical resistance. Additionally, one end of the first voltage divider circuit 31 on the resistor Rh side is connected to a connection point Cp3 between the drain of the FET 12b and resistor Rref. The other end of the first voltage divider circuit 31 on the resistor Rl side is connected to the ground line Ln. Furthermore, a connection point Cp4 between the resistor Rh and the resistor Rl in the first voltage divider circuit 31 is connected to a prescribed input terminal of the MCU 50 (for example, the F1 terminal here).

The operational amplifier 32 is, for example, an amplifier having an IN+ terminal, which is the non-inverting input terminal, an IN- terminal, which is the inverting input terminal, and an OUT terminal, which is an output terminal, and the amplifier outputs the result of amplifying the potential difference between the IN+ terminal and the IN- terminal by a prescribed amplification factor (differential gain) from the OUT terminal. In the present embodiment, the operational amplifier 32 is configured as an IC, and in addition to the above terminals, also further comprises a VS terminal, a GND terminal, and an EN terminal.

The VS terminal of operational amplifier 32 is the power supply terminal on the high-potential side of operational amplifier 32 and is connected to the system voltage line Lsys1. The GND terminal is the ground terminal on operational amplifier 32 and is connected to ground line LN. The IN+ terminal is connected to the connection point Cp2 described above. The IN- terminal is connected to a connection point Cp5 between the other end of the resistor Rheat and the drain of the FET 60. The OUT terminal is connected to one end of the second voltage divider circuit 33 on a resistor Rhh side, which is described later. The EN terminal is connected to a prescribed output terminal of the MCU 50 (for example, the K9 terminal here).

For example, while a prescribed power supply voltage is supplied via the VS terminal and the GND terminal, and a high-level voltage is input to the EN terminal, the operational amplifier 32 amplifies the potential difference between the IN+ terminal and the IN+ terminal and outputs the result from the OUT terminal. Note that, in the example shown in fig. 2, the system voltage Vcc is supplied to the operational amplifier 32 as the power supply voltage.

The second voltage divider circuit 33 includes a series connection between a resistor Rhh and a resistor Rhl, each of which has a prescribed electrical resistance. One end of the second voltage divider circuit 33 on the resistor Rhh side is connected to the OUT terminal of the operational amplifier 32. The other end of the second voltage divider circuit 33 on the resistor Rhl side is connected to the ground line Ln. Furthermore, a connection point Cp6 between the resistor Rhh and the resistor Rhl in the second voltage divider circuit 33 is connected to a prescribed input terminal of the MCU 50 (for example, the D1 terminal here).

### <2-4. MCU>

For example, the MCU 50 is composed mainly of a processor that performs various calculations, and controls the operation of a prescribed control target provided in the circuit of the inhalation device 100. Examples of the control target controlled by the MCU 50 can include the BJT 12a, second DC/DC converter 21, BJT 22a (i.e., FET 22b), operational amplifier 32, FET 60, etc. described previously.

For example, the MCU 50 includes a VBAT terminal, GND terminal, F9 terminal, L9 terminal, K9 terminal, F1 terminal, and D1 terminal as terminals for electrically connecting the inside and outside of the MCU 50.

The VBAT terminal of the MCU 50 is the power supply terminal of the MCU 50 on the high-potential side and is connected to the system voltage line Lsys1. The GND terminal is the ground terminal of the MCU 50 and is connected to the ground line Ln. The F9 terminal, L9 terminal, and K9 terminal are output terminals from where a prescribed electrical signal (i.e., voltage) is output. The F1 terminal and D1 terminal are input terminals to which a specified electrical signal is input.

For example, the MCU 50 can control the operation of the control target with output from the F9 terminal, L9 terminal, or K9 terminal. More specifically, the MCU 50 can control the BJT 12a with output from the F9 terminal, the BJT 22 (i.e., the FET 22b) with output from the L9 terminal, and the second DC/DC converter 21, operational amplifier 32, and FET 60 with output from the K9 terminal. Furthermore, the MCU 50 can acquire the voltage drop amount caused by the resistor Rheat (i.e., the heating unit 121) on the basis of input from the F1 terminal and the D1 terminal.

Note that the MCU 50 may further include a memory device (for example, a flash memory) that realizes the memory unit 114, a communication module that realizes the communication unit 115, etc.

### [3. Operation Example of Inhalation Device]

An operation example of the inhalation device 100 will be described next. The MCU 50 serving as the control unit 116 of the inhalation device 100 causes aerosol to be generated by the heating unit 121 by supplying power to the heating unit 121 (more specifically, the resistor Rheat) in response to a request for aerosol generation from the user, for example.

The request for aerosol generation can be, for example, an operation for instructing the start of heating (also referred hereinafter as a "heating start operation"). As an example, the heating start operation can be a press of a predetermined operation button (not shown) provided on the inhalation device 100. As another example, the heating start operation may be the insertion of the stick-type substrate 150 into the inhalation device 100, or inhalation on the inhalation device 100. Furthermore, the request for aerosol generation is not limited to direct operation on the inhalation device 100, but may be, for example, the reception of predetermined information from another device that is able to communicate with the inhalation device 100, such as a smartphone. The MCU 50 can detect the request for aerosol generation based on information obtained by the sensor unit 112 or the communication unit 115, for example.

Then, in a period from the detection of the request for aerosol generation to elapse of a prescribed time (e.g., 300 s) or inhalation of a prescribed amount (e.g., 15 times), for example, the MCU 50 repeatedly executes, at a prescribed cycle (e.g., every 50 ms), temperature detection control for acquiring the actual temperature (hereinafter also referred to as the "actual temperature") of the heating unit 121, and heating control for controlling the temperature of the heating unit 121 such that the actual temperature acquired by the temperature detection control approaches a prescribed target temperature.

Note that the period from the detection of the request for aerosol generation to elapse of a prescribed time or inhalation of a prescribed amount, or namely, the period in which the temperature detection control and heating control are repeatedly executed, is also referred to hereinafter as a "smoking session". The inhalation device 100 generates an aerosol during the smoking session, allowing the user to inhale (or in other words, smoke) the aerosol.

In the temperature detection control, the MCU 50 acquires the voltage drop amount caused by the heating unit 121 (more specifically, the resistor Rheat) when a prescribed voltage is supplied to the heating unit 121, for example, and acquires the electrical resistance of the heating unit 121 on the basis of the voltage drop amount. Additionally, the MCU 50 acquires the temperature of the heating unit 121 on the basis of the electrical resistance of the heating unit 121. As an example, the MCU 50 can acquire the temperature from the electrical resistance of the heating unit 121 by using a map, calculation formula, etc. defining the relationship between the electrical resistance and the temperature of the heating unit 121.

Furthermore, the heating control can be achieved by known feedback control. For example, the MCU 50 supplies power to the heating unit 121 in the form of pulses by pulse width modulation (PWM). In this case, the MCU 50 can perform heating control by adjusting the duty ratio of the power pulse supplied to the heating unit 121.

More specifically, the MCU 50 only needs to control the power supplied to the heating unit 121, e.g., said duty ratio, on the basis of the difference between the actual temperature and the target temperature, etc. Furthermore, the feedback control may be Proportional-Integral-Differential Controller (PID) control. Alternatively, the MCU 50 may perform simple ON-OFF control. In this case, for example, the MCU 50 may supply power to the heating unit 121 until the actual temperature reaches the target temperature, stop the supply of power to the heating unit 121 when the actual temperature reaches the target temperature, and supply power to the heating unit 121 again when the actual temperature falls below the target temperature.

### <3-1. Temperature Detection Control>

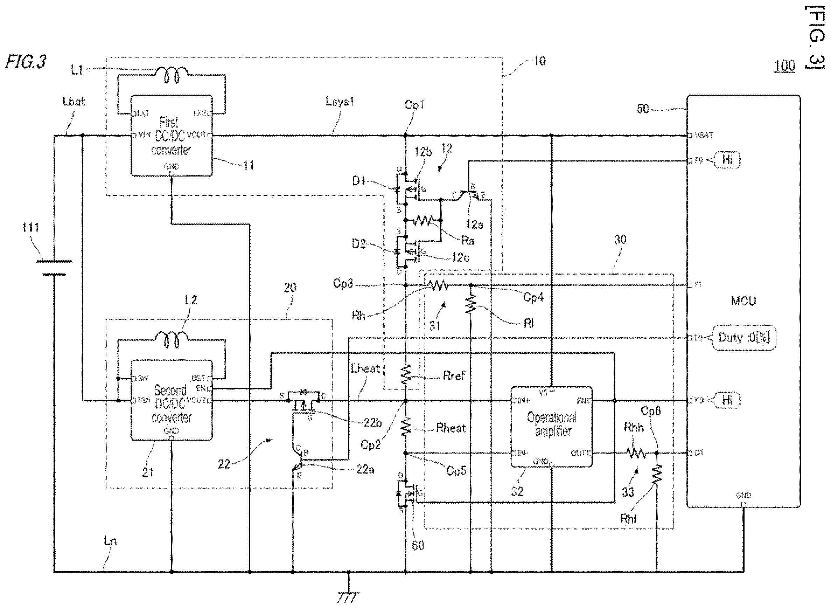

Next, a control example of each control target by the MCU 50 during temperature detection control is described. Fig. 3 is a view showing a control example of each control target by the MCU 50 during temperature detection control. Note that, in this section, the focus is on the areas that differ from those described in fig. 2, and the areas that are common to those described in fig. 2 will be omitted or simplified as appropriate. Furthermore, the following assumes that power is supplied from the power supply part 111 to the first DC/DC converter 11 and the second DC/DC converter 21.

As shown in fig. 3, in the temperature detection control, the MCU 50 sets the output from the K9 terminal to a high level. This supplies a high-level voltage to the EN terminal of each of the second DC/DC converter 21 and operational amplifier 32. Therefore, each of the second DC/DC converter 21 and the operational amplifier 32 are in a state where operation is possible. In addition, the high-level voltage output from the K9 terminal of the MCU 50 is also supplied to the gate of the FET 60, which is the low-side switch of the resistor Rheat. This puts the FET 60 in the on state.

Additionally, in the temperature detection control, the MCU 50 sets the output from the F9 terminal to a high level. This supplies a drive current to the base of the BJT 12a and puts the BJT 12a in the on state. When the BJT 12a is turned on, the respective gates of the FET 12b and FET 12c connected to the collector of the BJT 12a are supplied with the 0 V of the ground line LN.

Meanwhile, current from the system voltage line Lsys1 flows through a body diode D1 of the FET 12b to the respective sources of the FET 12b and FET 12c, resulting in a voltage that is the forward voltage of the body diode D1 subtracted from the system voltage Vcc (i.e., 3.3 V) being supplied, which generates a potential difference between the respective sources and gates of the FET 12b and FET 12c. Therefore, the FET 12b and FET 12c are each in the on state. Then, when the FET 12b and FET 12c are in the on state, the first switch circuit 12 is in the on state. In other words, the on state of the first switch circuit 12 means that both the FET 12b and FET 12c are in the on state.

When the first switch circuit 12 is in the on state, the system voltage Vcc is supplied to the series circuit of the resistor Rref and resistor Rheat. Below, the voltage supplied to the series circuit of the resistor Rref and resistor Rheat by the first switch circuit 12 entering the on state is also referred to as the "reference voltage Vtemp".

When the reference voltage Vtemp is supplied to the series circuit of the resistor Rref and resistor Rheat, a measurement voltage Vheat_temp which is a voltage obtained by dividing the reference voltage Vtemp by the resistor Rref and resistor Rheat is input to the IN+ terminal of the operational amplifier 32. Meanwhile, the IN- terminal of the operational amplifier 32 is supplied with the 0 V of the ground line Ln due to the FET 60 being in the on state.

Therefore, the operational amplifier 32 outputs, from the OUT terminal, a voltage obtained by amplifying the measurement voltage Vheat_temp by a prescribed amplification factor. The voltage output from the OUT terminal of the operational amplifier 32 is divided by the second voltage divider circuit 33 and then input to the D1 terminal of the MCU 50. The MCU 50 acquires the voltage value of the measurement voltage Vheat_temp on the basis of the voltage input to the D1 terminal in this manner.

In addition, when the first switch circuit 12 is turned on, the voltage obtained by dividing the reference voltage Vtemp (i.e., the system voltage Vcc) by the first voltage divider circuit 31 is input to the F1 terminal of the MCU 50. The MCU 50 acquires the voltage value of the reference voltage Vtemp on the basis of the voltage input to the F1 terminal in this manner.

The MCU 50 then finds the voltage drop amount caused by the resistor Rheat (i.e., the heating unit 121) from the respective voltage values of the reference voltage Vtemp and the measurement voltage Vheat_temp, acquires the electrical resistance of the resistor Rheat from the voltage drop amount, and acquires the temperature of the resistor Rheat (in other words, the actual temperature of the heating unit 121) from the electrical resistance. When acquiring the electrical resistance of the resistor Rheat, it is not necessary to acquire the reference voltage Vtemp, and instead the voltage drop amount caused by resistor Rheat (i.e., the heating unit 121) may be acquired from the voltage value of the measurement voltage Vheat_temp, and the electrical resistance of the resistor Rheat may be acquired from the voltage drop amount.

Furthermore, in the temperature detection control, the MCU 50 maintains the output from the L9 terminal at a low level, for example, thereby putting the BJT 22a (i.e., the second switch circuit 22) in the off state, and sets the duty ratio of the power pulse of the heating voltage Vheat supplied to the resistor Rheat (i.e., the heating unit 121) to 0 [%].

Note that, during the temperature detection control, the MCU 50 may stop the operation of the second DC/DC converter 21 by setting the input to the EN terminal of the second DC/DC converter 21 to a low level. For example, the EN terminal of the second DC/DC converter 21 may be connected to the output terminal of the MCU 50, for which the output during the temperature detection control is low level. In this manner, it is possible to reduce the power consumption caused by the unnecessary operation of the second DC/DC converter 21.

### <3-2. Heating Control>

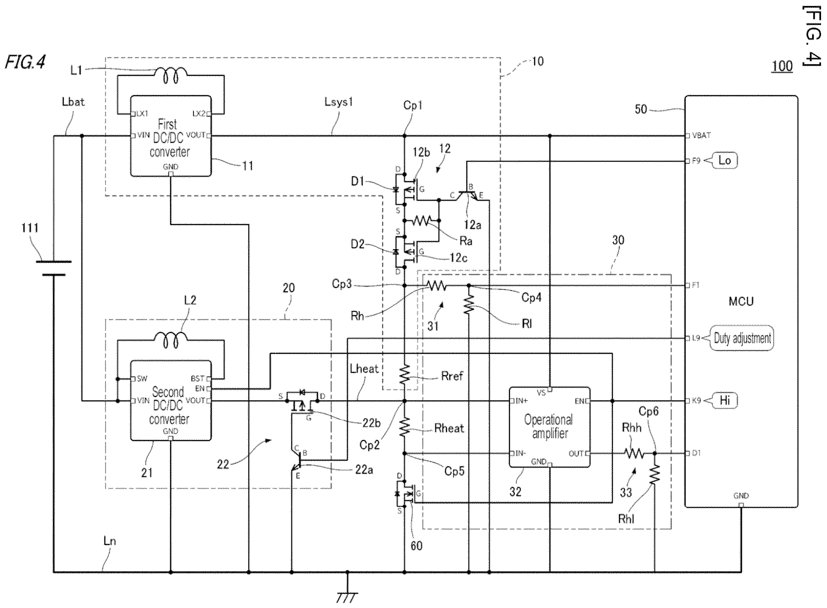

Next, a control example of each control target by the MCU 50 during heating control is described. Fig. 4 is a view showing a control example of each control target by the MCU 50 during heating control. Note that, in this section, the focus is on the areas that differ from those described in fig. 2 or fig. 3, and the areas that are common to those described in fig. 2 or fig. 3 will be omitted or simplified as appropriate.

As shown in fig. 4, in the heating control, the MCU 50 controls the on/off of the BJT 22a (i.e., the second switch circuit 22) with the output from the L9 terminal to thereby adjust the duty ratio of the power pulse of the heating voltage Vheat supplied to the resistor Rheat (i.e., the heating unit 121). This allows the MCU 50 to bring the actual temperature closer to the target temperature.

Additionally, as shown in fig. 4, in the heating control, the MCU 50 sets the output from the F9 terminal to a low level. This puts the BJT 12a in the off state, which interrupts the connection between the respective gates of the FET 12b and FET 12c with the ground line Ln. During heating control, current from the heating voltage line Lheat can flow through a body diode D2 of the FET 12c to the respective sources of the FET 12b and FET 12c. However, the connection between the respective gates of the FET 12b and FET 12c with the ground line Ln is interrupted, and thus the potential difference between the respective sources and gates of the FET 12b and FET 12c is kept below the threshold (for example, approximately 0 V) at which these FETs are driven. Therefore, the FET 12b and FET 12c are each in the off state, and the first switch circuit 12 is in the off state. This makes it possible to suppress the flow of current caused by the potential difference between the first voltage system 10 and the second voltage system 20 into the first voltage system 10 when the heating voltage Vheat is supplied to the heating unit 121.

As explained above, the MCU 50 serving as the control unit 116 of the inhalation device 100 is configured to be able to control the supply of the first voltage (e.g., the system voltage Vcc) to the heating unit 121 (more specifically, the resistor Rheat) by the first voltage system 10 and the supply of the second voltage (e.g., the heating voltage Vheat) to the heating unit 121 by the second voltage system.

More specifically, the MCU 50 can control the supply of the first voltage by the first voltage system 10 to the heating unit 121 by controlling the first switch circuit 12 of the first voltage system 10. Additionally, the MCU 50 can control the supply of the second voltage by the second voltage system 20 to the heating unit 121 by controlling the second switch circuit 22 of the second voltage system 20.

The MCU 50 then acquires the temperature of the heating unit 121 on the basis of the electrical resistance of the heating unit 121 (more specifically, the resistor Rheat) acquired by supplying the first voltage to the heating unit 121, and controls the supply of the second voltage to the heating unit 121 on the basis of this temperature. As a result, it is possible to control the power supply to the heating unit 121 while taking into account the actual temperature of the heating unit 121, which thus makes it possible to appropriately heat the aerosol source by the heating unit 121.

Furthermore, the first voltage supplied to the heating unit 121 when acquiring the temperature of the heating unit 121 is lower than the second voltage. As a result, the voltage supplied to the heating unit 121 when acquiring the temperature of the heating unit 121 can be lowered as compared to the second voltage. Therefore, it is possible to reduce the power consumption when acquiring the temperature of the heating unit 121 on the basis of the electrical resistance of the heating unit 121.

In addition, the first voltage system 10 includes the first DC/DC converter 11, which generates the system voltage Vcc from the power supply voltage Vbat, which is the output voltage of the power supply part 111, and the MCU 50 operates by being supplied with the system voltage Vcc. The first voltage supplied to the heating unit 121 when acquiring the temperature of the heating unit 121 is generated based on the basis of the system voltage Vcc. This makes it possible to acquire the temperature of the heating unit 121 using the first voltage acquired by taking advantage of the system voltage Vcc required to operate the MCU 50. Therefore, it is possible to suppress the configuration of the inhalation device 100 from becoming complex without requiring a DC/DC converter or the like in order to generate a dedicated voltage as compared to a case where the voltage supplied to the heating unit 121 is a dedicated voltage independent of the system voltage Vcc when acquiring the temperature of the heating unit 121.

The second voltage system 20 includes a second DC/DC converter 21 that boosts the power supply voltage Vbat, which is the output voltage of the power supply part 111, to generate the heating voltage Vheat, and the second voltage supplied to the heating unit 121 to heat the aerosol source is generated on the basis of the heating voltage Vheat. This makes it possible to supply the heating unit 121 with a voltage higher than the power supply voltage Vbat as the second voltage. Therefore, it is possible to efficiently heat the aerosol source by means of the heating unit 121.

The first voltage system 10 further includes a first switch circuit 12 that turns on or off the connection between the first voltage system 10 and the heating unit 121, and the first switch circuit 12 operates according to the control by the MCU 50. The MCU 50 sets the first switch circuit 12 to the on state when supplying the first voltage to the heating unit 121, and sets the first switch circuit 12 to the off state when supplying the second voltage to the heating unit 121. This makes it possible to suppress the flow of current caused by the potential difference between the first voltage system 10 and the second voltage system 20 into the first voltage system 10 when the second voltage is supplied to the heating unit 121. Therefore, it is possible to protect the MCU 50, etc. connected to the first voltage system 10 from the current caused by the potential difference between the first voltage system 10 and the second voltage system 20.

The first switch circuit 12 includes the BJT 12a, and the FET 12b and FET 12c which are P-channel MOSFETs. In the BJT 12a, the base is connected to the MCU 50, the emitter is connected to the ground line Ln, and the collector is connected to the respective gates of the FET 12b and FET 12c. The respective sources of the FET 12b and FET 12c are connected to each other and also to the respective gates of the FET 12b and FET 12c through the resistor Ra having a prescribed electrical resistance. In addition, the drain of the FET 12b is connected to the system voltage line Lsys1, where the system voltage Vcc is supplied from the first DC/DC converter 11, and the drain of the FET 12c is connected to the heating unit 121.

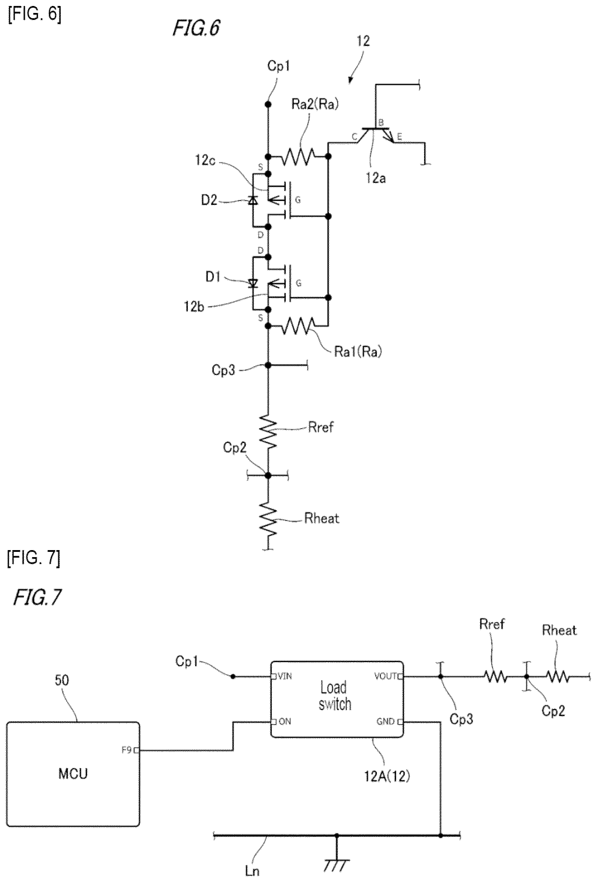

By configuring the first switch circuit 12 in this manner, the number of resistors required for the first switch circuit 12 can be reduced compared to a case where the first switch circuit 12 is configured as shown in fig. 6, which will be described later, and it is possible to suppress the configuration of the inhalation device 100 from becoming complex.

Note that, when the first switch circuit 12 is configured as described above, the MCU 50 may set the BJT 12a to the on state when supplying the first voltage to the heating unit 121. When the BJT 12a is set to the on state, both the FET 12b and FET 12c are set to the on state, and the first switch circuit 12 can be set to the on state. Meanwhile, the MCU 50 can set the BJT 12a to the off state when supplying the second voltage to the heating unit 121. When the BJT 12a is set to the off state, both the FET 12b and FET 12c are set to the off state, and the first switch circuit 12 can be set to the off state.

When the first switch circuit 12 is configured as described above, the orientation of each of the body diode D1 of the FET 12b and the body diode D2 of the FET 12c is directed toward the inside of the first switch circuit 12, and thus there is a possibility that charge accumulates between the FET 12b and FET 12c after supplying the second voltage to the heating unit 121 (i.e., after heating control).

Therefore, it is preferable for the MCU 50 to set BJT 12a temporarily to the on state at a prescribed timing after supplying the second voltage to the heating unit 121. This allows the charge accumulated between the FET 12b and FET 12c to escape to the ground line Ln after supplying the second voltage to the heating unit 121. Therefore, it is possible to suppress the occurrence of faults caused by the charge accumulated between the FET 12b and FET 12c. Note that the above prescribed timing may be, for example, at the end of one smoking session (i.e., when it is assumed that there will be some time before the next smoking).

In addition, the inhalation device 100 further comprises an operational amplifier 32. In the operational amplifier 32, the IN+ terminal (non-inverting input terminal) is connected to one end of the heating unit 121, the IN- terminal (inverting input terminal) is connected to the other end of the heating unit 121, the output terminal is connected to the MCU 50, and the operational amplifier operates with the system voltage Vcc as the power supply voltage. In addition, the MCU 50 acquires the electrical resistance of the heating unit 121 on the basis of the output of the operational amplifier 32, and acquires the temperature of the heating unit 121 on the basis of the electrical resistance. This makes it possible to further stabilize operation of the operational amplifier 32 while reducing the power consumption of the operational amplifier 32 as compared to a case where the power supply voltage of the operational amplifier 32 is higher than the system voltage Vcc (for example, heating voltage Vheat).

More specifically, by setting the power supply voltage of the operational amplifier 32 to be the system voltage Vcc, the power supply voltage can be supplied to the operational amplifier 32 before the heating voltage Vheat is applied. This allows the operational amplifier 32 to operate immediately when the MCU 50 supplies a high-level voltage to the EN terminal of operational amplifier 32, thus further stabilizing the operation of operational amplifier 32.

### [4. Another Example of Circuit Configuration of Inhalation Device]

Next, another example of the circuit configuration of the inhalation device 100 of the present embodiment will be described. Note that, hereinafter, the focus is on the areas that differ from the first example shown in fig. 2, and the areas that are common to those described in the first example will be omitted or simplified as appropriate.

### <4-1. <Second Example of Circuit Configuration of Inhalation Device>

First, a second example of a circuit configuration of the inhalation device 100 will be described. The second example is a case where an LDO regulator (LDO: Low Drop Out) for generating a step-down voltage by stepping down the system voltage Vcc is further provided to the inhalation device 100, and the first voltage based on the step-down voltage generated by the LDO regulator is supplied to the heating unit 121 when the temperature of the heating unit 121 is acquired.

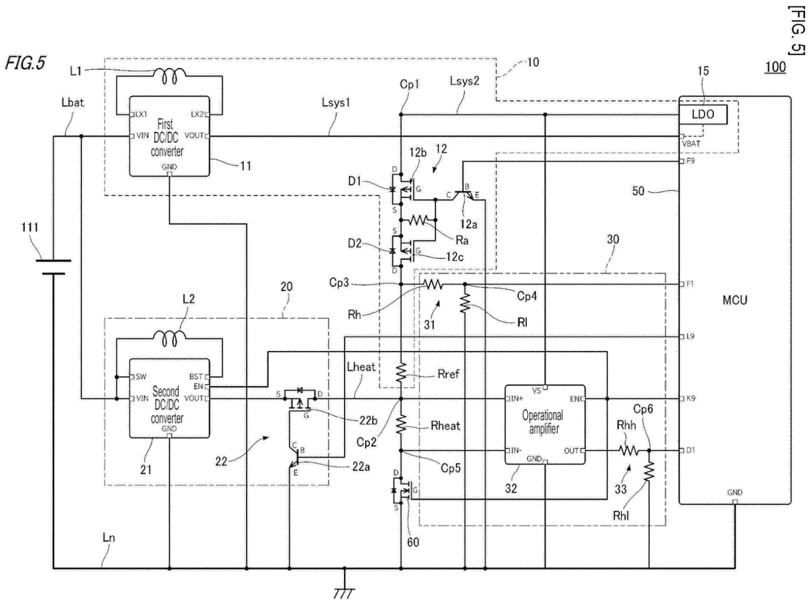

Fig. 5 is a view showing a second example of the circuit configuration of the inhalation device 100. As shown in fig. 5, the first voltage system 10 in the present example further includes a LDO regulator 15 that steps down the system voltage Vcc generated by the first DC/DC converter 11 to generate a step-down voltage Vccl.

The LDO regulator 15 is provided in the MCU 50, for example, which is an IC that constitutes the control unit 116 of the inhalation device 100. The LDO regulator 15 steps down the system voltage Vcc input via the VBAT terminal of the MCU 50 to generate the step-down voltage Vccl, and outputs the generated step-down voltage Vccl to the outside of the MCU 50.

The step-down voltage Vccl is lower than the system voltage Vcc, and can be set to 1.8 V, for example. Hereinafter, the step-down voltage is described as being 1.8 V, but the step-down voltage is not limited to this.

The step-down voltage Vccl generated by the LDO regulator 15 is supplied to the step-down voltage line Lsys2 via an unillustrated output terminal of the MCU 50, for example. In the case of the present example, the connection point Cp1 to which the drain of the FET 12b is connected is provided on the step-down voltage line Lsys2.

Therefore, in the case of the present example, in the temperature detection control, when the MCU 50 sets the first switch circuit 12 to the on state, the step-down voltage Vccl is supplied to the series circuit of the resistor Rref and resistor Rheat. In other words, the reference voltage Vtemp in the present example is the step-down voltage Vccl. The measurement voltage Vheat_temp which is a voltage obtained by dividing the reference voltage Vtemp (i.e., the step-down voltage Vccl) by the resistor Rref and resistor Rheat is input to the IN+ terminal of the operational amplifier 32.

In the present example, by connecting the VS terminal of operational amplifier 32 to the step-down voltage line Lsys2, the operational amplifier 32 is preferably supplied with the step-down voltage Vccl as the power supply voltage. This makes it possible to reduce the power consumption of the operational amplifier 32 as compared to a case where the power supply voltage of the operational amplifier 32 is higher (e.g., heating voltage Vheat) than the step-down voltage Vccl. Furthermore, it is possible to supply the power supply voltage to the operational amplifier 32 before the heating voltage Vheat is applied, which allows the operational amplifier 32 to operate immediately when the MCU 50 supplies a high-level voltage to the EN terminal of the operational amplifier 32, and allows further stabilizing of the operation of operational amplifier 32.

As described above, the first voltage system 10 further includes the LDO regulator 15 that steps down the system voltage Vcc to generate the step-down voltage Vccl. The first voltage supplied to the heating unit 121 when acquiring the temperature of the heating unit 121 may be generated the basis of the step-down voltage Vccl. This allows the voltage supplied to the heating unit 121 to be further reduced when acquiring the temperature of the heating unit 121, and it is possible to further reduce the power consumption when acquiring the temperature of the heating unit 121 on the basis of the electrical resistance of the heating unit 121.

In addition, the first voltage supplied to the heating unit 121 when acquiring the temperature of the heating unit 121 is based on the step-down voltage Vccl generated by the LDO regulator 15, which makes it possible to acquire the temperature of the heating unit 121 more accurately.

More specifically, the system voltage Vcc generated by the first DC/DC converter 11 is strictly a sawtooth wave shape. If such a system voltage Vcc is used as the reference voltage Vtemp, the quality of the input to operational amplifier 32 may decrease, resulting in a low signal-to-noise ratio (SNR) of the output from operational amplifier 32.

In contrast, the step-down voltage Vccl generated by the LDO regulator 15 has a stable value compared to the system voltage Vcc generated by the first DC/DC converter 11. Therefore, by setting such a step-down voltage Vccl as the reference voltage Vtemp, it is possible to improve the SNR of the output from the operational amplifier 32 and improve the accuracy of the temperature of the heating unit 121, which is acquired on the basis of the output of operational amplifier 32.

Furthermore, the LDO regulator 15 may be provided in the MCU 50, for example, which is an IC that constitutes the control unit 116 of the inhalation device 100. As a result, it is possible to generate a step-down voltage Vccl with fewer components than the configuration comprising the LDO regulator separately from the MCU 50. Therefore, it is possible to suppress the configuration of the inhalation device 100 from becoming complex.

### <4-2. Third Example of Circuit Configuration of Inhalation Device>

A third example of a circuit configuration of the inhalation device 100 will be described next. The third example described below is an example when the configuration of the first switch circuit 12 is changed from the first example or second example described above.

Fig. 6 is a view showing the third example of the circuit configuration of the inhalation device 100. As shown in fig. 6, the first switch circuit 12 of the present example includes a BJT 12a, FET 12b, FET 12c, and two resistors RA (resistor Ra1 and resistor Ra2).

In this example, the respective drains of the FET 12b and FET 12c are connected to each other. The source of the FET 12b is connected to one end of the resistor Rheat (i.e., the heating unit 121) via the resistor Rref and also to the gate of the FET 12b via the resistor Ra1. The source of the FET 12c is connected to the connection point Cp1 provided on the system voltage line Lsys1 or step-down voltage line Lsys2, and also to the gate of the FET 12c through the resistor Ra2. Note that, although the illustration and detailed explanation are omitted, the connection relationship of BJT 12a in the present example is also the same as in the first example or second example described above. In the present example, an N-channel MOSFET may also be provided in the present example instead of the BJT 12a (bipolar transistor), similar to the first example or second example described above.

Even if the first switch circuit 12 is configured as shown in the present example, in temperature detection control, the MCU 50 can turn on the FET 12b and FET 12c, or namely, the first switch circuit 12 by turning on the BJT 12a through setting the output from the F9 terminal to a high level. Therefore, similar to the first example or second example mentioned above, the reference voltage Vtemp can be supplied to the series circuit of the resistor Rref and resistor Rheat.

Furthermore, even if the first switch circuit 12 is configured as shown in the present example, in heating control, the MCU 50 can turn off the BJT 12a, or namely, the first switch circuit 12 by turning off the BJT 12a through setting the output from the F9 terminal to a low level. This makes it possible to suppress the flow of current caused by the potential difference between the first voltage system 10 and the second voltage system 20 into the first voltage system 10 when the second voltage is supplied to the heating unit 121. Therefore, it is possible to protect the MCU 50, etc. connected to the first voltage system 10 from the current caused by the potential difference between the first voltage system 10 and the second voltage system 20. The potential difference between the source and gate of the FET 12b can be calculated from the potential difference between the first voltage system 10 and the second voltage system 20, the electrical resistance of the two resistors Ra, etc., but the gate threshold voltage of the FET 12b is set to be higher than the voltage stepped down at the resistor Ra1 when the second voltage is being supplied to the heating unit 121 during heating control.

In addition, the connection point Cp3 provided between the source of the FET 12b and resistor Rref and the connection point Cp1 provided on the system voltage line Lsys1 or step-down voltage line Lsys2 are connected, with the resistors Ra1 and Ra2 interposed therebetween, and thus a small current flows into the first voltage system 10 when the second voltage is supplied to the heating unit 121. Taking this into account, when configuring the first switch circuit 12 as in the present example, it is preferable to select a first DC/DC converter 11 or LDO regulator 15 having a configuration that can tolerate this inflow of small current.

Furthermore, when the first switch circuit 12 is configured as in the present example, charge does not accumulate between the FET 12b and FET 12c after supplying the second voltage to the heating unit 121 (i.e., after heating control). This is because the body diode D1 of the FET 12b and the body diode D2 of the FET 12c work to release the charge between the FET 12b and FET 12c to the outside. Therefore, when the first switch circuit 12 is configured as in the present example, it is not necessary to set BJT 12a temporarily to the on state after supplying the second voltage to the heating unit 121, and it is possible to simplify the control of the first switch circuit 12 by the MCU 50.

### <4-3. Fourth Example of Circuit Configuration of Inhalation Device>

A fourth example of a circuit configuration of the inhalation device 100 will be described next. The fourth example described below is an example of when the first switch circuit 12 of the first example, second example, or third example described above is configured by an IC that functions as a load switch.

Fig. 7 is a view showing the fourth example of the circuit configuration of the inhalation device 100. The first switch circuit 12 of the present example includes a load switch 12A, as shown in fig. 7. The load switch 12A is an IC that operates under the control of the MCU 50 and functions as a switch to switch on or off the connection between the first voltage system 10 and the resistor Rheat (i.e., the heating unit 121).

For example, the load switch 12A comprises a VIN terminal, GND terminal, VOUT terminal, and ON terminal as terminals for electrically connecting the inside and outside of the load switch 12A.

The VIN terminal of the load switch 12A is the input terminal of the load switch 12A and is connected to the connection point Cp1 provided on the system voltage line Lsys1 or the step-down voltage line Lsys2. The GND terminal is the ground terminal of the load switch 12A and is connected to ground line Ln. The VOUT terminal is the output terminal of the load switch 12A and is connected to one end of the resistor Rheat via the resistor Rref. The ON terminal is connected, for example, to the F9 terminal of the MCU 50.

The load switch 12A outputs the voltage supplied to the VIN terminal from the VOUT terminal only when a high-level voltage is input to the ON terminal, for example.

Even if the first switch circuit 12 is configured with the load switch 12A as in the present example, the MCU 50 outputs the system voltage Vcc or the step-down voltage Vccl from the load switch 12A by setting the output from the F9 terminal to a high level in temperature detection control and, similarly to in the first example, second example, or third example described above, can supply the reference voltage Vtemp to the series circuit of the resistor Rref and resistor Rheat.

By providing the first switch circuit 12 described above between the VIN terminal and VOUT terminal inside the load switch 12A, a current reverse flow prevention function between the VIN terminal and the VOUT terminal operates when a low-level voltage is being input to the ON terminal, for example, and current caused by the potential difference between the first voltage system 10 and the second voltage system can be suppressed from flowing into the first voltage system 10 while the heating voltage Vheat is being supplied to the heating unit 121.

In addition, when the first switch circuit 12 is configured by the load switch 12A as in the present example, the number of electronic components required can be reduced as compared to, for example, when the first switch circuit 12 is configured with individual electronic components, and it is possible to suppress the configuration of the inhalation device 100 from becoming complex. Furthermore, the mounting work of the first switch circuit 12 can also be simplified.

Furthermore, the load switch 12A preferably does not have an output discharge function. If the load switch 12A is configured to have a discharge resistor for an output discharge function, the voltage applied to the VOUT terminal side is applied to the discharge resistor when the heating voltage Vheat is being supplied to the heating unit 121 by the second voltage system 20, and the power consumption increases. Therefore, by configuring the load switch 12A without an output discharge function, it is possible to suppress an increase in power consumption when the heating voltage Vheat is being supplied to the heating unit 121 by the second voltage system 20.

As described above, according to the present embodiment, it is possible to provide a inhalation device 100 that can reduce the power consumption when acquiring the temperature of the heating unit 121 on the basis of the electrical resistance of the heating unit 121.

The MCU 50 only needs the output of operational amplifier 32 during temperature detection control. However, in the present embodiment, the MCU 50 supplies a high-level voltage to the EN terminal of the operational amplifier 32 so that operational amplifier 32 operates not only during temperature detection control but also during heating control. This is because it may take a certain amount of time from the start of operation of the operational amplifier 32 to the stabilization of the operation of the operational amplifier 32 (in other words, the output of operational amplifier 32).

If the operational amplifier 32 were operated only during temperature detection control, the MCU 50 would acquire the temperature of the heating unit 121 on the basis of the output of the operational amplifier 32 before stabilization, which risks reducing the accuracy of the acquired temperature. From the viewpoint of suppressing the occurrence of such a situation, in the present embodiment, the operational amplifier 32 is operated not only during temperature detection control but also during heating control. Due to this, it is possible to improve the accuracy of the temperature of the heating unit 121 acquired on the basis of the output of the operational amplifier 32.

In other words, the MCU 50 may operate operational amplifier 32 only during temperature detection control, provided that the operational amplifier 32 has quick stability characteristics. As one example, if the EN terminal of operational amplifier 32 is connected to the F9 terminal of the MCU 50, the MCU 50 can operate the operational amplifier 32 only during temperature detection control. Thus, by operating the operational amplifier 32 only during temperature detection control, the operational amplifier 32 can be operated only when the MCU 50 requires the output of the operational amplifier 32, which makes it possible to reduce power consumption caused by excess operation of the operational amplifier 32.

In the present embodiment, the power consumption when acquiring the temperature of the heating unit 121 is reduced by lowering the voltage supplied to the heating unit 121. On the other hand, a method is also conceivable whereby the voltage during acquiring of the temperature of the heating unit 121 is set to the heating voltage Vheat, and the current value thereof is lowered to reduce power consumption, for example.

However, the second DC/DC converter 21, which generates the heating voltage Vheat, generally has characteristics specialized for outputting large currents so that the heating unit 121 (resistor Rheat) can be heated efficiently and rapidly, and cannot efficiently perform operations such as outputting small current. Therefore, if the voltage when acquiring the temperature of the heating unit 121 is set as the heating voltage Vheat, even if the current value is lowered, the effect of reducing power consumption is limited.

The switching frequency of the first DC/DC converter 11 is preferably set higher than the switching frequency of the second DC/DC converter 21. In other words, as described above, the voltage output from the first DC/DC converter 11 and the second DC/DC converter 21 can fluctuate in the form of a sawtooth wave. The fluctuation thereof is greater with a smaller switching frequency.

Therefore, if the switching frequency of the first DC/DC converter 11, which generates the system voltage Vcc serving as the source of the voltage input to operational amplifier 32, is lowered, the quality of input to the operational amplifier 32 will lower, resulting also in a low SNR of the output from operational amplifier 32. Therefore, there is a risk that the accuracy of the temperature of the heating unit 121 acquired on the basis of the output of the operational amplifier 32 may deteriorate.

Accordingly, it is preferable that the switching frequency of the first DC/DC converter 11 is a frequency that is high to a certain degree. On the other hand, the switching frequency of the second DC/DC converter 21, which generates the heating voltage Vheat only for heating the heating unit 121, can sufficiently heat the heating unit 121 even if somewhat low, and thus is unlikely to cause problems.

Although one embodiment of an aerosol generation device of the present disclosure has been described above with reference to the drawings, it goes without saying that the present disclosure is not limited to this embodiment. It is obvious that a person skilled in the art will be able to conceive of a number of variant examples or modified examples within the scope disclosed in the claims, and any such variant examples or modified examples are naturally understood to fall within the technical scope of the present disclosure. Furthermore, the components in the embodiment described above may be arbitrarily combined within a range not deviating from the spirit of the invention.

As an example of a modification example, a diode that only causes current to flow from the first voltage system 10 side to the second voltage system 20 side may be provided instead of the FET 12b described above. Even if providing such a diode instead of the FET 12b, it is possible to suppress the flow of current caused by the potential difference between the first voltage system 10 and the second voltage system 20 from flowing into the first voltage system 10. When a diode is provided instead of the FET 12b, it is preferable that, as described above, the MCU 50 finds the voltage drop amount caused by the resistor Rheat (i.e., the heating unit 121) from the respective voltage values of the reference voltage Vtemp and the measurement voltage Vheat_temp, acquires the electrical resistance of the resistor Rheat from the voltage drop amount, and acquires the temperature of the resistor Rheat (in other words, the actual temperature of the heating unit 121) from the electrical resistance. During the temperature detection control, the voltage acquired by subtracting the forward voltage of the diode from the first voltage is applied to the series circuit of the resistor Rref and resistor Rheat as the reference voltage Vtemp. When acquiring the temperature (in other words, the actual temperature of the heating unit) of the resistor Rheat, the MCU 50 acquires the voltage value of the reference voltage Vtemp on the basis of the voltage input to the F1 terminal, and thus, even if a diode is provided instead of the FET 12b, temperature detection control can be performed as with the FET 12b.

Furthermore, the power supply voltage Vbat may be supplied directly to the LDO regulator 15 and the LDO regulator 15 may be configured to generate the step-down voltage Vccl from the power supply voltage Vbat.

The present specification and so on sets forth at least the following features. Corresponding components and so on in the embodiment described above are shown by way of example in parentheses, but are not limited thereto.

(1) An aerosol generation device comprising: a power supply (power supply part 111, 111A, 111B);
   a heating unit (heating unit 121, 121A, 121B) that includes a heating resistor (resistor Rheat) having a correlation between electrical resistance and temperature, and that is configured to be able to heat an aerosol source by being supplied with power;
   a first voltage system (first voltage system 10) that is provided between the power supply and the heating unit, and that is configured to be able to supply, to the heating unit, a first voltage generated on the basis of an output voltage of the power supply;
   a second voltage system (second voltage system 20) that is provided between the power supply and the heating unit, and that is configured to be able to supply, to the heating unit, a second voltage generated on the basis of the output voltage of the power supply; and
   a control unit (control unit 116, 116A, 116B, MCU 50) that is configured to be able to control the supply of the first voltage to the heating unit by the first voltage system, and the supply of the second voltage to the heating unit by the second voltage system, wherein
   the first voltage is a voltage lower than the second voltage, and
   the control unit acquires the temperature of the heating unit on the basis of the electrical resistance of the heating unit acquired by supplying the first voltage to the heating unit, and controls the supply of the second voltage to the heating unit on the basis of the temperature.

According to (1), the control unit acquires the temperature of the heating unit on the basis of the electrical resistance of the heating unit acquired by supplying the first voltage to the heating unit, and controls the supply of the second voltage to the heating unit on the basis of the temperature; thus, it is possible to control the supply of power to the heating unit while taking the actual temperature of the heating unit into account, and to appropriately perform heating of the aerosol source by the heating unit. In addition, the first voltage supplied to the heating unit when acquiring the temperature of the heating unit is lower than the second voltage, and thus it is possible to reduce power consumption when acquiring the temperature of the heating unit as compared to a case where the second voltage is supplied when acquiring the temperature of the heating unit.

(2) The aerosol generation device according to (1), wherein
the first voltage system includes a first DC/DC converter (first DC/DC converter 11) that generates a prescribed system voltage from the output voltage of the power supply,
the control unit operates by being supplied with the system voltage, and
the first voltage is generated on the basis of the system voltage.

According to (2), it is possible to acquire the temperature of the heating unit using the first voltage acquired by taking advantage of the system voltage required to operate the control unit. This makes it possible to suppress the configuration of the aerosol generation device from becoming complex without requiring a DC/DC converter or the like in order to generate a dedicated voltage as compared to a case where the voltage supplied to the heating unit is a dedicated voltage independent of the system voltage when acquiring the temperature of the heating unit.

(3) The aerosol generation device according to (2), wherein
the second voltage system includes a second DC/DC converter (second DC/DC converter 21) that boosts the output voltage of the power supply to generate a heating voltage, and
the second voltage is generated on the basis of the heating voltage.

According to (3), it is possible to supply the heating unit with a voltage higher than the power supply output voltage as the second voltage. This makes it possible to efficiently heat the aerosol source by means of the heating unit.

(4) The aerosol generation device according to (2) or (3), wherein
the first voltage system further includes a switch circuit (first switch circuit 12) that turns on or off the connection between the first voltage system and the heating unit,
the switch circuit operates in accordance with control by the control unit, and
the control unit sets the switch circuit to an on state when the supply of the first voltage to the heating unit is performed, and sets the switch circuit to an off state when the supply of the second voltage to the heating unit is performed.

According to (4), it is possible to suppress the flow of current caused by the potential difference between the first voltage system and the second voltage system into the first voltage system when the second voltage is supplied to the heating unit. This makes it possible to protect electronic components or the like connected to the first voltage system from the current caused by the potential difference between the first voltage system and the second voltage system.

(5) The aerosol generation device according to (4), wherein
the switch circuit includes a first switch (BJT 12a), and a first FET (FET 12b) and a second FET (FET 12c), each of which is a P-channel MOSFET,
the first switch is connected to respective gates of the first FET and the second FET, and opening/closing of the first switch is regulated by the potential of the gates,
respective sources of the first FET and the second FET are connected to each other and also to the respective gates of the first FET and the second FET through a resistor (resistor Ra) having a prescribed electrical resistance,
a drain of the first FET is connected to a power line (system voltage line Lsys1) supplied with the system voltage from the first DC/DC converter, and
a drain of the second FET is connected to the heating unit.

According to (5), the number of resistors required for the switch circuit can be reduced, and it is possible to suppress the configuration of the aerosol generation device from becoming complex.

(6) The aerosol generation device according to any one of (2) to (5), wherein
the aerosol generation device further comprises an operational amplifier (operational amplifier 32),
in the operational amplifier, a non-inverting input terminal is connected to one end of the heating unit, an inverting input terminal is connected to the other end of the heating unit, an output terminal is connected to the control unit, and the operational amplifier operates with the system voltage as a power supply voltage, and
the control unit acquires the electrical resistance on the basis of an output of the operational amplifier.

According to (6), it is possible to reduce the power consumption of the operational amplifier compared to a case where the power supply voltage of the operational amplifier is set higher than the system voltage (for example, heating voltage), while avoiding a reduction in the accuracy of the temperature of the heating unit acquired on the basis of the output of the operational amplifier.

(7) The aerosol generation device according to (2) or (3), wherein
the first voltage system further includes an LDO regulator (LDO regulator 15) that steps down the system voltage to generate a step-down voltage, and
the first voltage is generated on the basis of the step-down voltage.

According to (7), it is possible for the voltage supplied to the heating unit to be further reduced when acquiring the temperature of the heating unit, and it is possible to further reduce the power consumption when acquiring the temperature of the heating unit. In addition, the first voltage supplied to the heating unit when acquiring the temperature of the heating unit is based on the step-down voltage generated by the LDO regulator, which makes it possible to acquire the temperature of the heating unit more accurately.

(8) The aerosol generation device according to (7), wherein
the LDO regulator is provided in an IC (MCU 50) that constitutes the control unit.

According to (8), it is possible to generate a step-down voltage without adding an electronic component separate from the IC that constitutes the control unit. Therefore, it is possible to suppress the configuration of the aerosol generation device from becoming complex.

(9) The aerosol generation device according to (7) or (8), wherein
the first voltage system further includes a switch circuit (first switch circuit 12) that turns on or off the connection between the first voltage system and the heating unit,
the switch circuit operates in accordance with control by the control unit, and
the control unit sets the switch circuit to an on state when the supply of the first voltage to the heating unit is performed, and sets the switch circuit to an off state when the supply of the second voltage to the heating unit is performed.

According to (9), it is possible to suppress the flow of current caused by the potential difference between the first voltage system and the second voltage system into the first voltage system when the second voltage is supplied to the heating unit. This makes it possible to protect electronic components or the like connected to the first voltage system from the current caused by the potential difference between the first voltage system and the second voltage system.

(10) The aerosol generation device according to (9), wherein
the switch circuit includes a first switch (BJT 12a), and a first FET (FET 12b) and a second FET (FET 12c), each of which is a P-channel MOSFET,
the first switch is connected to respective gates of the first FET and the second FET, and opening/closing of the first switch is regulated by the potential of the gates,
respective sources of the first FET and the second FET are connected to each other and also to the respective gates of the first FET and the second FET through a resistor having a prescribed electrical resistance,
a drain of the first FET is connected to a power line (step-down voltage line Lsys2) supplied with the step-down voltage from the LDOL regulator, and
a drain of the second FET is connected to the heating unit.

According to (10), the number of resistors required for the switch circuit can be reduced, and it is possible to suppress the configuration of the inhalation device from becoming complex.

(11) The aerosol generation device according to any one of (7) to (10), wherein
the aerosol generation device further comprises an operational amplifier (operational amplifier 32),
in the operational amplifier, a non-inverting input terminal is connected to one end of the heating unit, an inverting input terminal is connected to the other end of the heating unit, an output terminal is connected to the control unit, and the operational amplifier operates with the step-down voltage as a power supply voltage, and
the control unit acquires the electrical resistance on the basis of an output of the operational amplifier.

According to (11), it is possible to reduce the power consumption of the operational amplifier compared to a case where the power supply voltage of the operational amplifier is set higher than the step-down voltage (for example, heating voltage), while avoiding a reduction in the accuracy of the temperature of the heating unit acquired on the basis of the output of the operational amplifier.

(12) The aerosol generation device according to (5) or (10), wherein
the first switch is a bipolar transistor, and
in the bipolar transistor, a base is connected to the control unit, an emitter is connected to ground, and a collector is connected to the respective gates of the first FET and the second FET.

According to (12), it is possible to regulate the potential of the respective gates of the first FET and second FET by turning the bipolar transistor serving as the first switch on and off (i.e., opening/closing).

(13) The aerosol generation device according to (5) or (10), wherein
the first switch is an N-channel MOSFET, and
in the N-channel MOSFET, a gate is connected to the control unit, a source is connected to ground, and a drain is connected to respective gates of the first FET and the second FET.

According to (13), it is possible to regulate the potential of the respective gates of the first FET and second FET by turning the MOSFET serving as the first switch on and off (i.e., opening/closing).

(14) The aerosol generation device according to (5) or (11), wherein
the control unit further sets the first switch to the on state at a prescribed timing after supply of the second voltage to the heating unit is performed.

According to (14), the charge accumulated between the first FET and second FET is allowed to escape to ground after supplying the second voltage to the heating unit. This makes it possible to suppress the occurrence of faults or the like caused by the charge accumulated between the first FET and second FET.

(15) The aerosol generation device according to (4) or (9), wherein
the switch circuit is configured by a load switch (load switch 12A).

According to (15), the number of electronic components required can be reduced as compared to a case where the switch circuit is configured by individual electronic components, and it is possible to suppress the configuration of the aerosol generation device from becoming complex. Furthermore, the mounting work of the switch circuit can also be simplified.

(16) The aerosol generation device according to (4), wherein
the switch circuit includes a bipolar transistor (BJT 12a), and a first FET (FET 12b) and a second FET (FET 12c), each of which is a P-channel MOSFET,
in the bipolar transistor, a base is connected to the control unit, an emitter is connected to ground, and a collector is connected to the respective gates of the first FET and the second FET, respective drains of the first FET and the second FET are connected to each other,
a source of the first FET is connected to the heating unit and also to the gate of the first FET via a first resistor (resistor Ra1) having a prescribed electrical resistance, and
a source of the second FET is connected to a power line (system voltage line Lsys1) supplied with the system voltage from the first DC/DC converter and also to the gate of the second FET via a second resistor (resistor Ra) having a prescribed electrical resistance.

According to (16), it is possible to prevent charge from accumulating between the first FET and second FET after supplying the second voltage to the heating unit; thus, for example, it is not necessary to turn the bipolar transistor temporarily on after supplying the second voltage to the heating unit, thereby making it possible to simplify the control of the switch circuit by the control unit.

(17) The aerosol generation device according to (9), wherein
the switch circuit includes a bipolar transistor (BJT 12a), and a first FET (FET 12b) and a second FET (FET 12c), each of which is a P-channel MOSFET,
in the bipolar transistor, a base is connected to the control unit, an emitter is connected to ground, and a collector is connected to the respective gates of the first FET and the second FET, respective drains of the first FET and the second FET are connected to each other,
a source of the first FET is connected to the heating unit and also to the gate of the first FET via a first resistor (resistor Ra1) having a prescribed electrical resistance, and
a source of the second FET is connected to a power line (step-down voltage line Lsys2) supplied with the step-down voltage from the LDO regulator and also to the gate of the second FET via a second resistor (resistor Ra) having a prescribed electrical resistance.

According to (17), it is possible to prevent charge from accumulating between the first FET and second FET after supplying the second voltage to the heating unit; thus, for example, it is not necessary to turn the bipolar transistor temporarily on after supplying the second voltage to the heating unit, thereby making it possible to simplify the control of the switch circuit by the control unit.

### REFERENCE SIGNS LIST

100, 100A, 100B Inhalation device (aerosol generation device)
111, 111A, 111B Power supply part (power supply)
116, 116A, 116B Control unit
121, 121A, 121B Heating unit
11 First DC/DC converter
12 First switch circuit (switch circuit)
12a BJT (bipolar transistor)
12b FET (first FET)
12c FET (second FET)
15 LDO regulator
21 Second DC/DC converter
50 MCU (control unit)
Rheat Resistor (heating resistor)
Lsys1 System voltage line (power line)
Lsys2 Step-down voltage line (power line)

## Claims

1. An aerosol generation device comprising: a power supply;
a heating unit that includes a heating resistor having a correlation between electrical resistance and temperature, and that is configured to be able to heat an aerosol source by being supplied with power;
a first voltage system that is provided between the power supply and the heating unit, and that is configured to be able to supply, to the heating unit, a first voltage generated on the basis of an output voltage of the power supply;
a second voltage system that is provided between the power supply and the heating unit, and that is configured to be able to supply, to the heating unit, a second voltage generated on the basis of the output voltage of the power supply; and
a control unit that is configured to be able to control the supply of the first voltage to the heating unit by the first voltage system, and the supply of the second voltage to the heating unit by the second voltage system, wherein
the first voltage is a voltage lower than the second voltage, and
the control unit acquires the temperature of the heating unit on the basis of the electrical resistance of the heating unit acquired by supplying the first voltage to the heating unit, and controls the supply of the second voltage to the heating unit on the basis of the temperature.

2. The aerosol generation device according to claim 1, wherein
the first voltage system includes a first DC/DC converter that generates a prescribed system voltage from the output voltage of the power supply,
the control unit operates by being supplied with the system voltage, and
the first voltage is generated on the basis of the system voltage.

3. The aerosol generation device according to claim 2, wherein
the second voltage system includes a second DC/DC converter that boosts the output voltage of the power supply to generate a heating voltage, and
the second voltage is generated on the basis of the heating voltage.

4. The aerosol generation device according to claim 2 or 3, wherein
the first voltage system further includes a switch circuit that turns on or off the connection between the first voltage system and the heating unit,
the switch circuit operates in accordance with control by the control unit, and
the control unit sets the switch circuit to an on state when the supply of the first voltage to the heating unit is performed, and sets the switch circuit to an off state when the supply of the second voltage to the heating unit is performed.

5. The aerosol generation device according to claim 4, wherein
the switch circuit includes a first switch, and a first FET and a second FET, each of which is a P-channel MOSFET,
the first switch is connected to respective gates of the first FET and the second FET, and opening/closing of the first switch is regulated by the potential of the gates,
respective sources of the first FET and the second FET are connected to each other and also to the respective gates of the first FET and the second FET through a resistor having a prescribed electrical resistance,
a drain of the first FET is connected to a power line supplied with the system voltage from the first DC/DC converter, and
a drain of the second FET is connected to the heating unit.

6. The aerosol generation device according to any one of claims 2 to 5, wherein
the aerosol generation device further comprises an operational amplifier,
in the operational amplifier, a non-inverting input terminal is connected to one end of the heating unit, an inverting input terminal is connected to the other end of the heating unit, an output terminal is connected to the control unit, and the operational amplifier operates with the system voltage as a power supply voltage, and
the control unit acquires the electrical resistance on the basis of an output of the operational amplifier.

7. The aerosol generation device according to claim 2 or 3, wherein
the first voltage system further includes an LDO regulator that steps down the system voltage to generate a step-down voltage, and
the first voltage is generated on the basis of the step-down voltage.

8. The aerosol generation device according to claim 7, wherein
the LDO regulator is provided in an IC that constitutes the control unit.

9. The aerosol generation device according to claim 7 or 8, wherein
the first voltage system further includes a switch circuit that turns on or off the connection between the first voltage system and the heating unit,
the switch circuit operates in accordance with control by the control unit, and
the control unit sets the switch circuit to an on state when the supply of the first voltage to the heating unit is performed, and sets the switch circuit to an off state when the supply of the second voltage to the heating unit is performed.

10. The aerosol generation device according to claim 9, wherein
the switch circuit includes a first switch, and a first FET and a second FET, each of which is a P-channel MOSFET,
the first switch is connected to respective gates of the first FET and the second FET, and opening/closing of the first switch is regulated by the potential of the gates,
respective sources of the first FET and the second FET are connected to each other and also to the respective gates of the first FET and the second FET through a resistor having a prescribed electrical resistance,
a drain of the first FET is connected to a power line supplied with the step-down voltage from the LDOL regulator, and
a drain of the second FET is connected to the heating unit.

11. The aerosol generation device according to any one of claims 7 to 10, wherein
the aerosol generation device further comprises an operational amplifier,
in the operational amplifier, a non-inverting input terminal is connected to one end of the heating unit, an inverting input terminal is connected to the other end of the heating unit, an output terminal is connected to the control unit, and the operational amplifier operates with the step-down voltage as a power supply voltage, and
the control unit acquires the electrical resistance on the basis of an output of the operational amplifier.

12. The aerosol generation device according to claim 5 or 10, wherein
the first switch is a bipolar transistor, and
in the bipolar transistor, a base is connected to the control unit, an emitter is connected to ground, and a collector is connected to the respective gates of the first FET and the second FET.

13. The aerosol generation device according to claim 5 or 10, wherein
the first switch is an N-channel MOSFET, and
in the N-channel MOSFET, a gate is connected to the control unit, a source is connected to ground, and a drain is connected to respective gates of the first FET and the second FET.

14. The aerosol generation device according to claim 5 or 10, wherein
the control unit further sets the first switch to the on state at a prescribed timing after supply of the second voltage to the heating unit is performed.

15. The aerosol generation device according to claim 4 or 9, wherein
the switch circuit is configured by a load switch.
